(19) Europäisches Patentamt / European Patent Office / Office européen des brevets

(11) EP 3 897 907 B1

(12) **FASCICULE DE BREVET EUROPEEN**

(45) Date de publication et mention de la délivrance du brevet:
**14.02.2024 Bulletin 2024/07**

(21) Numéro de dépôt: **19821089.0**

(22) Date de dépôt: **18.12.2019**

(51) Classification Internationale des Brevets (IPC):
***B01D 21/01*** *(2006.01)* ***C02F 1/56*** *(2023.01)*
***C02F 103/10*** *(2006.01)*

(52) Classification Coopérative des Brevets (CPC):
(C-Sets disponibles)
**C02F 1/56; B01D 21/01; C08F 220/56;**
C02F 2103/10; C08F 2438/03 (Cont.)

(86) Numéro de dépôt international:
**PCT/EP2019/086070**

(87) Numéro de publication internationale:
**WO 2020/127568 (25.06.2020 Gazette 2020/26)**

(54) **PROCÉDÉ POUR LE TRAITEMENT DE SUSPENSIONS DE PARTICULES SOLIDES DANS L'EAU À L'AIDE DE POLYMÈRES AMPHOTÈRES**

VERFAHREN ZUR BEHANDLUNG VON SUSPENSIONEN VON FESTPARTIKELN IN WASSER MITTELS AMPHOTERER POLYMERE

METHOD FOR TREATING SUSPENSIONS OF SOLID PARTICLES IN WATER USING AMPHOTERIC POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2018 FR 1873519**

(43) Date de publication de la demande:
**27.10.2021 Bulletin 2021/43**

(73) Titulaire: **SNF Group**
**42160 Andrézieux-Bouthéon (FR)**

(72) Inventeurs:
- **TIZZOTTI, Morgan**
  **42160 Andrezieux Boutheon (FR)**
- **READ, Emmanuelle**
  **42160 Andrezieux Boutheon (FR)**
- **FAVERO, Cédrick**
  **42160 Andrezieux Boutheon (FR)**
- **GAILLARD, Nicolas**
  **42160 Andrezieux Boutheon (FR)**

(74) Mandataire: **Lavoix**
**2, place d'Estienne d'Orves**
**75441 Paris Cedex 09 (FR)**

(56) Documents cités:
**WO-A1-2015/180900 CN-A- 102 229 690**
**JP-A- 2015 057 275**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
C08F 220/56, C08F 220/06

## Description

L'invention concerne un procédé de traitement d'une suspension de particules solides dans l'eau, telle que des résidus minéraux. Ce procédé comprend l'étape de mise en contact de la suspension de particules solides dans l'eau avec un polymère particulier, soluble dans l'eau.

L'invention concerne le traitement de résidus miniers sous la forme d'effluents aqueux comprenant des particules solides. Le procédé de l'invention permet de séparer tout ou partie de l'eau d'un effluent aqueux comprenant des particules solides. Ce procédé comprend l'addition dans l'effluent d'au moins un polymère hydrosoluble obtenu par polymérisation radicalaire contrôlée.

L'invention concerne également une composition comprenant un effluent aqueux comprenant des particules solides traitées, le polymère hydrosoluble obtenu par polymérisation radicalaire contrôlée. Elle concerne une composition comprenant un effluent aqueux comprenant des particules solides, au moins un polymère hydrosoluble obtenu par polymérisation radicalaire contrôlée.

De nombreuses méthodes d'extraction minière produisent des résidus sous la forme d'effluents aqueux comprenant des particules solides. Par exemple, la production d'hydrocarbures à partir de sables bitumineux ou pétrolifères conduit à de tels résidus miniers. Ainsi, la gestion des résidus miniers constitue un défi de taille pour l'industrie minière, notamment depuis le début de l'exploitation des sables pétrolifères. Il incombe donc aux exploitants de déterminer la façon d'éliminer ces sous-produits de manière sécuritaire et efficace. Le défi est d'autant plus considérable du fait de l'importance de la taille des exploitations de sables pétrolifères.

De manière générale, l'exploitation minière produit également de tels résidus ou matériaux de rebut, notamment lors de l'extraction de minerais pour la production de charbon, de diamant, de phosphate ou de différents métaux, par exemple aluminium, platine, fer, or, cuivre, argent, etc. De tels résidus peuvent également résulter de la transformation de minerais ou encore de procédés industriels ou de lavage.

Les résidus miniers peuvent prendre différentes formes, notamment de boues. En général, il s'agit de suspensions de particules solides dans de l'eau.

Généralement, les résidus miniers des sables pétrolifères se composent donc d'eau, d'argile, de sable et d'hydrocarbures résiduels provenant du processus d'extraction.

Les pratiques courantes de l'industrie consistaient jusqu'à présent à pomper les résidus dans de vastes bassins de décantation. Par la suite, la matière la plus lourde, principalement du sable, se dépose au fond, tandis que l'eau monte à la surface et peut être recyclée. La couche intermédiaire, connue sous le nom de résidus fins mûrs (MFT ou mature fine tailings), est généralement composée à 70 % en poids d'eau et à 30 % en poids de particules d'argile fines. Naturellement, la couche de résidus fins mûrs pourrait prendre des siècles à se solidifier. Le développement continu de l'exploitation minière a nécessité la création d'un nombre croissant de bassins de décantation toujours plus importants.

Ainsi, les boues minérales produites par des procédés de traitement physiques ou chimiques des sables bitumineux sont stockées dans des bassins à ciel ouvert, des étangs, des barrages de rétention ou des remblais sous forme semi-liquide. Ces grands volumes de boue stockée créent par conséquent un véritable danger, en particulier en cas de rupture des digues.

Notamment du fait des impératifs techniques, environnementaux ou réglementaires, il est désormais nécessaire de trouver un moyen d'accélérer ou d'améliorer l'efficacité de la transformation des résidus fins mûrs en un dépôt ferme pouvant ensuite être réhabilité.

La remise en état des sols suite à l'exploitation minière est rendue obligatoire par la législation environnementale.

L'accélération du traitement des résidus miniers est également nécessaire, notamment en augmentant la vitesse de sédimentation des résidus afin de recycler l'eau efficacement ainsi que pour réduire le volume de résidus.

De manière générale, la séparation et le recyclage de tout ou partie de l'eau présente au sein des effluents aqueux miniers constituent des buts essentiels lors de l'exploitation minière. Ainsi, les procédés de traitement d'effluents aqueux comprenant des particules solides ont comme but essentiel d'améliorer le rendement de séparation de l'eau, notamment dans le but de recycler l'eau séparée ainsi que de permettre la manipulation aisée du résidu final. L'augmentation de ce rendement net de séparation de l'eau (NWR ou net water release) constitue un but important des procédés de traitement des effluents aqueux comprenant des particules solides.

On connaît des méthodes de traitement physique de ces résidus miniers, par exemple la centrifugation, la filtration, l'électrophorèse et l'électrocoagulation.

D'autre part, des procédés chimiques émergent. On connaît par exemple des procédés impliquant l'addition de produits chimiques, tels que le silicate de sodium, des agents de floculation organiques, des agents de coagulation inorganiques, des agents d'oxydation, des agents de réduction ou encore du dioxyde de carbone. On connaît également l'utilisation de polymères synthétiques comme agents de coagulation ou de floculation, pour séparer les solides du liquide. Quelques documents pertinents sont WO 2015/180900 A1, JP 2015 057275 A, CN 102 229 690 A.

Cependant, ces techniques ne permettent pas d'apporter une solution totalement efficace aux problèmes rencontrés, notamment d'un point de vue technique, environnemental ou d'ordre public.

De plus les polymères actuellement utilisés ont une limite en dosage au-delà de laquelle les performances n'augmentent plus voire même se dégradent.

Il est donc nécessaire de pouvoir disposer de méthodes qui permettent d'apporter des solutions à tout ou partie des problèmes des méthodes de l'état de la technique.

Les caractéristiques essentielles du procédé de l'invention sont comprises dans la revendication indépendante 1. Le procédé comprend au moins l'addition dans l'effluent d'au moins un polymère hydrosoluble comprenant au moins un monomère non ionique et au moins un monomère anionique obtenu par polymérisation radicalaire contrôlée, ledit polymère ayant une viscosité UL comprise entre 2 et 4,5 cps.

Par « polymère hydrosoluble », on désigne un polymère qui, mis en solution à l'aide d'une agitation dans de l'eau à une température de 25°C à une concentration de 50g/l, donne une solution exempte de particules insolubles.

Les polymérisations radicalaires contrôlées (PRC) regroupent les techniques telles que la polymérisation par transfert d'iode (ITP) (Iodine Transfer Polymerization), la polymérisation contrôlée par des nitroxydes(NMP) (Nitroxide Mediated Polymerization), par transfert d'atome (ATRP) (Atom Transfer Radical Polymerization), par transfert de chaîne par addition-fragmentation réversible (RAFT) (Reversible Addition Fragmentation chain Transfer Polymerization), dont fait partie la technologie MADIX (MAcromolecular Design by Interchange of Xanthates), diverses variations de polymérisations avec des composés organométalliques (OMRP) (Organometallic Mediated Radical Polymerization), la polymérisation radicalaire contrôlée par des composés hétéroatomiques (OrganoHeteroatom-mediated Radical Polymerization (OHRP).

Selon l'invention la polymérisation radicalaire contrôlée est une polymérisation par transfert de chaîne par addition-fragmentation réversible, RAFT (Reversible Addition Fragmentation chain Transfer Polymerization).

L'ensemble de ces techniques repose sur un équilibre réversible entre une espèce dormante et une espèce active (macro-radical en croissance), comme illustré sur la figure 10.

Ce processus d'activation-désactivation permet aux chaînes de croître à la même vitesse et ce, jusqu'à la consommation totale du monomère, rendant possible le contrôle des poids moléculaires des polymères et l'obtention de distributions étroites de poids moléculaires. Ceci va également permettre de minimiser l'hétérogénéité de la composition. La désactivation réversible des chaînes en croissance est à l'origine de la minimisation des réactions de terminaison irréversibles. La grande majorité des chaînes de polymère reste sous forme dormante et est donc réactivable. Il est alors possible de fonctionnaliser les extrémités de chaîne en vue d'amorcer d'autres modes de polymérisation ou pour faire des extensions de chaînes. Ceci est la clé pour accéder à des hauts poids moléculaires, des compositions et des architectures contrôlées.

La polymérisation radicalaire contrôlée présente donc les aspects distinctifs suivants :

1. Le nombre de chaînes polymériques est fixe pendant toute la durée de la réaction,
2. Les chaînes polymériques croissent toutes à la même vitesse, ce qui se traduit par :

   - Une augmentation linéaire des poids moléculaires,
   - Une distribution des poids moléculaires resserrée,

3. Le poids moléculaire moyen est contrôlé par le rapport molaire monomère / précurseur.

Le caractère contrôlé est d'autant plus marqué que la vitesse de réactivation des chaînes en radical est très grande devant la vitesse de croissance des chaînes (propagation). Cependant, dans certains cas, la vitesse de réactivation des chaînes en radical est inférieure ou égale à la vitesse de propagation. Dans ces cas, les conditions 1 et 2 ne sont pas observées et, par conséquent, le contrôle des poids moléculaires n'est pas possible.

Selon l'invention la polymérisation radicalaire contrôlée s'effectue avec un agent de contrôle de formule (I) :

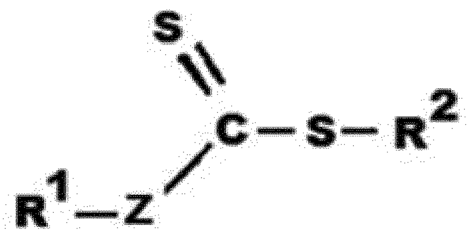

formule (I)

dans laquelle

- Z= O, S ou N,

- $R^1$ et $R^2$, identiques ou différents, représentent :

  - un groupe (i) alkyle, acyle, alcényle ou alcynyle éventuellement substitué, ou
  - un cycle carboné (ii), saturé ou non, éventuellement substitué ou aromatique, ou
  - un hétérocycle (iii), saturé ou non, éventuellement substitué ou aromatique, ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires), R représentant un groupe alkyle ou aryle.

De manière plus préférentielle la polymérisation radicalaire contrôlée s'effectue avec un agent de contrôle de formule (I) :

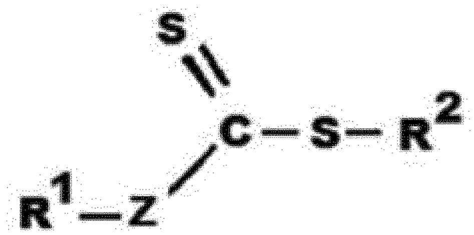

formule (I)

dans laquelle

- Z= O, S ou N,
- $R^1$ et $R^2$, identiques ou différents, représentent :

  - un groupe (i) alkyle linéaire ou ramifié comprenant de 1 à 20 carbones, de préférence de 1 à 10 carbones, éventuellement substitué, acyle linéaire ou ramifié comprenant de 1 à 20 carbones, de préférence de 1 à 10 carbones, éventuellement substitué, alcényle linéaire ou ramifié comprenant de 2 à 20 carbones, de préférence de 2 à 10 carbones, éventuellement substitué, ou alcynyle linéaire ou ramifié comprenant de 2 à 20 carbones, de préférence de 2 à 10 carbones, éventuellement substitué, ou
  - un cycle carboné (ii), saturé ou non, éventuellement substitué ou aromatique, comprenant de 4 à 7 carbones, préférentiellement de 5 à 6 carbones ou
  - un hétérocycle (iii), saturé ou non, éventuellement substitué ou aromatique, comprenant 1,2 ou 3 hétéroatomes choisis parmi O,N ou S, et de 3 à 6 carbones, préférentiellement de 4 à 5 carbones,

  ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),
  R représentant un groupe alkyle linéaire ou ramifié comprenant de 1 à 20 carbones, de préférences de 1 à 10 carbones, ou aryle comprenant de 6 à 10 atomes de carbone.

Selon un mode préféré, l'agent de contrôle est de formule (I) dans laquelle :

- Z = O.

Selon un autre mode préféré, l'agent de contrôle est de formule (I) dans laquelle :

- Z = O.

- $R^1$ et $R^2$, identiques ou différents, représentent un groupe (i) linéaire ou ramifié comprenant de 1 à 20 carbones, de préférence de 1 à 10 carbones, acyle linéaire ou ramifié comprenant de 1 à 20 carbones, de préférence de 1 à 10 carbones, alcényle linéaire ou ramifié comprenant de 2 à 20 carbones, de préférence de 2 à 10 carbones, ou alcynyle linéaire ou ramifié comprenant de 2 à 20 carbones, de préférence de 2 à 10 carbones, ces groupes étant éventuellement substitués par un ou des groupes aromatiques substitués comprenant 4 à 7 carbones ou des groupes alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),

R représentant un groupe alkyle linéaire ou ramifié comprenant de 1 à 20 carbones, de préférences de 1 à 10 carbones, ou aryle comprenant de 6 à 10 atomes de carbone.

Selon un autre mode préféré, l'agent de contrôle est de formule (II) suivante :

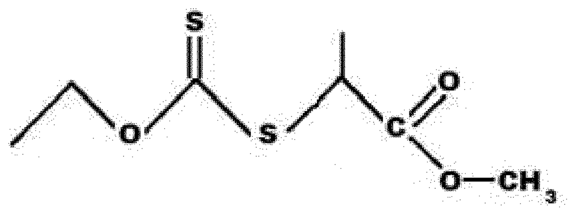

Formule (II)

Le polymère hydrosoluble obtenu par polymérisation radicalaire contrôlée est préparé à partir d'au moins un monomère non ionique et au moins un monomère anionique.

Le ou les monomères non ioniques pouvant être utilisés dans le cadre de l'invention peuvent être choisis, notamment, dans le groupe comprenant les monomères vinyliques solubles dans l'eau. Des monomères préférés appartenant à cette classe sont, par exemple, l'acrylamide, le méthacrylamide ; le N-isopropylacrylamide ; le N,N-diméthylacrylamide ; le N, N diéthylacrylamide ; le N-méthylolacrylamide ; la N-vinylformamide ; le N-vinyl acetamide ; la N-vinylpyridine ; la N-vinylpyrrolidone ; l'acryloyl morpholine (ACMO), le méthacrylate de glycidyle, le méthacrylate de glycéryle et la diacétone acrylamide. Un monomère non ionique préféré est l'acrylamide.

Le ou les monomères non-ionique sont de préférence utilisés en une quantité allant de 50 à 90 % en moles, plus préférentiellement de 30 à 45 % en mole, par rapport au nombre total de moles de monomères. De manière particulièrement préférée selon l'invention, le polymère hydrosoluble est un polymère préparé à partir d'acrylamide.

Le ou les monomères anioniques sont préférentiellement choisis parmi l'acide acrylique ; l'acide méthacrylique ; l'acide itaconique ; l'acide crotonique ; l'acide maléique ; l'acide fumarique ; l'acide 2-acrylamido 2-méthylpropane sulfonique ; l'acide vinylsulfonique ; l'acide vinylphosphonique ; l'acide allylsulfonique ; l'acide allylphosphonique ; l'acide styrène sulfonique, ledit monomère anionique étant non salifié, partiellement ou totalement salifié, et les sels du méthacrylate de 3-sulfopropyle. La forme salifiée correspond avantageusement aux sels de métaux alcalins (Li, Na, K...), de métaux alcalino-terreux (Ca, Mg...) ou d'ammonium, notamment les ammoniums quaternaires.

Le ou les monomères anioniques sont de préférence utilisés en une quantité allant 10 à 70 % en moles, de préférence allant de 20 à 55 % en moles, par rapport au nombre total de moles de monomères.

Les monomères anioniques particulièrement préférés sont l'acide acrylique, l'acide 2-acrylamido-2-méthylpropanesulfonique et leurs sels correspondants.

Selon l'invention le polymère hydrosoluble obtenu par polymérisation radicalaire contrôlée est obtenu à partir d'au moins un monomère non ionique et au moins un monomère anionique.

Préférentiellement le polymère hydrosoluble obtenu par polymérisation radicalaire contrôlée est obtenu à partir d'acrylamide et d'acide acrylique.

De manière avantageuse le polymère hydrosoluble obtenu par polymérisation radicalaire contrôlée comprend exclusivement des monomères hydrosolubles. Par monomères hydrosolubles nous désignons tous les monomères ayant une solubilité dans l'eau supérieure à 100 g/l, préférentiellement supérieure à 200g/l, à 25°C.

L'initiateur de polymérisation radicalaire peut être choisi parmi les initiateurs classiquement utilisés en polymérisation radicalaire. Il peut s'agir par exemple d'un des initiateurs suivants :

- les peroxydes d'hydrogène tels que ceux choisis dans le groupe comprenant l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, et le persulfate d'ammonium,
- les composés azoïques tels que ceux choisis dans le groupe comprenant le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis(2-méthyl-N-(2-hydroxyéthyl) propionamide], et le 2,2'-azobis(isobutyramide) dihydrate,
- les systèmes redox comportant des combinaisons telles que celles choisies dans le groupe comprenant :

  - les mélanges de a) peroxyde d'hydrogène ou d'alkyle, peresters, ou percarbonates et similaires et de b) n'importe lequel des sels de fer, de sels titaneux, formaldéhyde sulfoxylate de zinc ou formaldéhyde sulfoxylate de sodium, et c) des sucres réducteurs,
  - les persulfates, perborate ou perchlorate de métaux alcalins ou d'ammonium en association avec un bisulfite de métal alcalin, tel que le métabisulfite de sodium, et des sucres réducteurs, et
  - les persulfates de métal alcalin en association avec un acide arylphosphinique, tel que l'acide benzène phosphonique et autres similaires, et des sucres réducteurs.

De manière préférentielle ledit polymère a une viscosité UL comprise entre 2,5 à 4,2 cps. La viscosité UL est mesurée à l'aide d'un viscosimètre Brookfield de type LVT muni d'un adaptateur UL dont le module tourne à 60 tours/minute (0,1% de polymère en poids dans une solution saline de chlorure de sodium 1 M à 25°C).

L'indice de polydispersité (Ip) du polymère obtenu selon l'invention est avantageusement d'au plus 2 ($\leq 2$), de préférence d'au plus 1,5 ($\leq 1{,}5$). L'indice de polydispersité est déterminé selon la formule suivante :

$$Ip = Mw/Mn$$

Mw est le poids moléculaire moyen en poids
Mn est le poids moléculaire moyen en nombre

La détermination des poids moléculaires moyen en poids (Mw) et en nombre (Mn) se fait de manière conventionnelle, avantageusement par la chromatographie d'exclusion stérique (CES) couplée à un détecteur de diffusion de lumière multi-angles de type Dawn Heleos II, 18 angles (Wyatt technology).

Selon l'invention, l'effluent est avantageusement un effluent d'extraction minière, provenant des mines de charbon, des mines de diamant, des mines de phosphate, des mines de métal comme l'aluminium, le platine, le fer, l'or, le cuivre, argent, etc..... L'effluent peut également être un effluent d'extraction minière de sable bitumineux ou de sable pétrolifère.

De préférence l'effluent est un effluent d'extraction minière de sable bitumineux ou de sable pétrolifère. Outre les particules solides, l'effluent comprend de l'eau. Il peut comprendre du sable, de l'argile et de l'eau ou bien du sable, de l'argile, de l'eau et du bitume résiduel.

Généralement, l'effluent aqueux selon l'invention comprend de 5 à 70 % en masse, de préférence de 20 à 50 % en masse, plus préférentiellement de 30 à 40 % en masse, de particules solides, notamment des particules minérales notamment choisies parmi argile et sable ou leurs mélanges.

L'effluent traité selon le procédé de l'invention peut comprendre différents résidus. Ces résidus peuvent être des résidus frais ou des résidus fins. De préférence, il s'agit d'un effluent comprenant des résidus fins mûrs (RFM ou MFT pour mature fine tailings) ou d'un effluent comprenant des résidus fins frais (RFF ou FFT pour fresh fine tailings), en particulier il s'agit d'un effluent comprenant des résidus fins mûrs (RFM ou MFT pour mature fine tailings), et plus particulièrement il s'agit d'un effluent comprenant des résidus fins mûrs (RFM ou MFT pour mature fine tailings) comprenant une quantité d'argiles allant de 5 à 70 % en masse.

De manière générale, l'effluent aqueux issu de l'exploitation minière de sables bitumineux et traité selon l'invention, peut également comprendre du bitume résiduel. Le bitume résiduel est alors présent en faible quantité, généralement en une quantité inférieure à 5 % en masse d'effluent aqueux.

L'invention concerne également l'utilisation pour traiter un effluent aqueux comprenant des particules solides, d'au moins un polymère obtenu par polymérisation radicalaire contrôlée, ledit polymère ayant une viscosité UL comprise

entre 2 et 4,5 cps. Les caractéristiques essentielles de l'utilisation sont comprises dans la revendication indépendante 11.

L'invention concerne également une composition comprenant un effluent aqueux comprenant des particules solides, au moins un polymère obtenu par polymérisation radicalaire contrôlée, ledit polymère ayant une viscosité UL comprise entre 2 et 4,5 cps. Les caractéristiques essentielles de la composition sont comprises dans la revendication indépendante 12.

Liste des figures :

La figure 1 représente la LNE (Libération Nette de l'Eau) selon le dosage du contre-exemple et des polymères PRC
La figure 2 représente la LNE selon le dosage du contre-exemple et du polymère PRC 1
La figure 3 représente la LNE selon le dosage du contre-exemple et des polymères PRC
La figure 4 représente la LNE selon le dosage des polymères A et A'
La figure 5 représente la LNE selon le dosage des polymères B et B'
La figure 6 représente la LNE selon le dosage des polymères C et C'
La figure 7 représente la LNE selon le dosage des polymères D et D'
La figure 8 représente la LNE selon le dosage des polymères E et E'
La figure 9 représente la LNE selon le dosage des polymères F et F'
La figure 10 représente l'équilibre réversible entre une espèce dormante et une espèce active

## EXEMPLES

**Protocole de test de viscosité UL :**

500mg de polymère sont ajoutés dans 490ml d'une solution d'eau déionisée. Après dissolution complète du polymère 29,25 grammes de NaCl sont ajoutés.

La viscosité est mesurée à l'aide d'un viscosimètre Brookfield digitale DVII+ sur une vitesse de rotation à 60 tours/minute à 25°C (module UL).

**Protocole de tests de floculation :**

En premier lieu, les polymères sont dissous dans de l'eau déionisée afin d'obtenir des solutions aqueuses présentant une concentration de 0,4 % en poids de polymère par rapport au poids total de la solution. Toutes ces solutions sont agitées mécaniquement à 500 t/min jusqu'à la solubilisation complète des polymères et l'obtention de solutions claires et homogènes. Pour chaque test, le volume approprié de solution de polymère est ajouté dans 200 g de MFT puis le mélange complet est mélangé manuellement jusqu'à ce qu'on observe une floculation et une libération d'eau optimum.

La LNE représente la « Libération Nette de l'Eau ». Elle correspond à la quantité totale d'eau récupérée pendant le test de floculation moins la quantité d'eau indument ajoutée lors de l'incorporation de la solution aqueuse polymérique dans la suspension.

**Exemple 1** : Synthèse d'un copolymère poly(acrylamide-co-acrylate de sodium) par voie radicalaire classique non contrôlée (contre-exemple)

Un réacteur de 1,5 l équipé d'un agitateur mécanique, d'un thermomètre et d'une arrivée d'azote est chargé d'eau distillée, d'acrylamide (AM) et d'acide acrylique (AA) selon la composition suivante :

- Acrylamide : 70% molaire
- Acide Acrylique : 30% molaire

Le mélange obtenu est homogénéisé puis refroidi, neutralisé avec de l'hydroxyde de sodium jusqu'à pH = 7,6-7,7 et enfin dégazé sous un flux d'azote. La polymérisation est ensuite initiée à l'aide d'un système redox (initiateur). Le gel résultant, obtenu après polymérisation est ensuite broyé et séché dans un four de séchage de manière à obtenir une poudre.

La viscosité UL du polymère de référence est de 3,5 cps.

**Exemple 2** : Synthèse de copolymères poly(acrylamide-co-acrylate de sodium) par PRC selon l'invention (PRC 1)

Un réacteur de 1,5 l équipé d'un agitateur mécanique, d'un thermomètre et d'une arrivée d'azote est chargé d'eau distillée, d'acrylamide (AM) et d'acide acrylique (AA) selon la composition suivante :

- Acrylamide : 70% molaire
- Acide Acrylique : 30% molaire

Le mélange obtenu est homogénéisé puis refroidi, neutralisé avec de l'hydroxyde de sodium jusqu'à pH = 7,6-7,7 et enfin dégazé sous un flux d'azote. La polymérisation est ensuite initiée à l'aide d'un système redox (initiateur), mais en présence d'un agent de contrôle de polymérisation radicalaire de formule (II). Le gel résultant, obtenu après polymérisation est ensuite broyé et séché dans un four de séchage de manière à obtenir une poudre.

La viscosité UL du polymère PRC 1 est de 3,5 cps.

**Exemple 3** : Synthèse de copolymères poly(acrylamide-co-acrylate de sodium) par PRC selon l'invention (PRC 2).

Le copolymère PRC 2 est synthétisé dans les mêmes conditions que l'exemple 1 en remplaçant l'hydroxyde de sodium par de l'hydroxyde de potassium.

La viscosité UL du polymère PRC 2 est de 3,5 cps.

**Exemple 4** : Floculation d'une MFT (29,2 % en poids d'extrait sec).

Les tests de floculation sont effectués sur une suspension de résidus fins mûrs (MFT) issus de l'exploitation des sables bitumineux présentant une teneur en solides de 29,2% en poids. Les résultats obtenus avec l'échantillon de référence et les produits PRC 1 et 2 sont regroupés sur la figure 1. Les résultats de ces expériences montrent que l'effet de surdosage des deux produits PRC 1 et PRC 2 intervient à des dosages bien plus haut que le contre-exemple.

**Exemple 5 :** Floculation d'une MFT (33,2 % en poids d'extrait sec).

Les tests de floculation sont effectués sur une suspension de résidus fins mûrs (MFT) issus de l'exploitation des sables bitumineux présentant une teneur en solides de 33,2% en poids. Les résultats obtenus avec l'échantillon de référence et le produit PRC 1 sont regroupés sur la figure 2. Les résultats de ces expériences montrent que l'effet de surdosage du produit PRC 1 intervient à des dosages plus haut que le produit de référence. De plus l'augmentation du dosage du polymère PRC 1 permet d'atteindre des valeurs de LNE plus importantes et jamais atteintes par le produit de référence.

**Exemple 6 :** Floculation d'une MFT (31,7 % en poids d'extrait sec).

Les tests de floculation sont effectués sur une suspension de résidus fins mûrs (MFT) issus de l'exploitation des sables bitumineux présentant une teneur en solides de 31,7% en poids. Les résultats obtenus avec l'échantillon de référence et le produit PRC 1 et 2 sont regroupés sur la figure 3. Les résultats de ces expériences montrent que les produits PRC 1 et 2 ont un dosage optimal bien moins important que le produit de référence et conduisent à une LNE significativement supérieure et jamais atteinte par le produit de référence.

**Exemple 7:** Floculation d'une MFT (32,0 % en poids d'extrait sec).

Deux séries de six polymères hydrosolubles d'UL comprises entre 3,0 et 6,3 cps ont été préparées. Une série contre-exemple ou les polymères hydrosolubles sont obtenus selon le procédé décrit dans l'exemple 1 et une série dite « CRP » ou les polymères hydrosolubles sont obtenus selon le procédé décrit dans l'exemple 2. Des tests de floculation sont effectués sur une suspension de résidus fins mûrs (MFT) issus de l'exploitation des sables bitumineux présentant une teneur en solides de 32,0% en poids. Pour chaque test, on compare les résultats obtenus avec un polymère hydrosoluble contre-exemple et un polymère hydrosoluble « CRP » d'UL similaires.

[Tableau 1]

| Polymère hydrosoluble contre-exemple | Viscosité UL (cps) | | Polymère hydrosoluble PRC | Viscosité UL (cps) |
|---|---|---|---|---|
| A | 3 | | A' | 3 |
| B | 3,8 | | B' | 3,8 |
| C | 4,2 | | C' | 4,2 |
| D | 5,2 | | D' | 5,2 |
| E | 5,7 | | E' | 5,7 |
| F | 6,3 | | F' | 6,3 |
| *viscosité UL des polymères contre-exemples et des polymères PRC selon l'invention* | | | | |

On observe que, à UL équivalente, les polymères hydrosolubles PRC conduisent systématiquement à de meilleures performances que les polymères hydrosolubles de référence (LNE plus élevée et plage de dosage plus large) tant que la viscosité UL reste inférieure ou égale à 4,20 cps (Figures 4, 5 et 6). Au-delà de cette valeur, on n'observe quasiment aucune différence entre les polymères hydrosolubles PRC et les polymères hydrosolubles de référence (Figures 7, 8 et 9).

**Revendications**

1. Procédé de traitement d'un effluent aqueux comprenant des particules solides, comprenant l'addition dans l'effluent d'au moins un polymère hydrosoluble comprenant au moins un monomère non ionique et au moins un monomère anionique obtenu par polymérisation radicalaire contrôlée, ledit polymère ayant une viscosité UL comprise entre 2 et 4,5 cps,

   pour lequel la polymérisation radicalaire contrôlée est une polymérisation par transfert de chaîne par addition-fragmentation réversible, RAFT (Reversible Addition Fragmentation chain Transfer Polymerization), et
   pour lequel la polymérisation radicalaire contrôlée s'effectue avec un agent de contrôle de formule (I) :

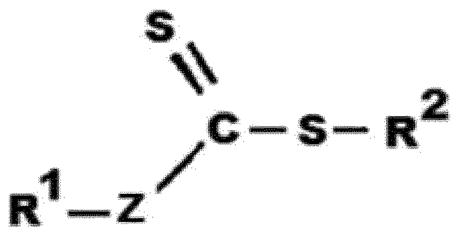

formule (I)

   dans laquelle

   - Z=O, S ou N,
   - $R^1$ et $R^2$, identiques ou différents, représentent :

     un groupe (i) alkyle, acyle, alcényle ou alcynyle, linéaire ou réticulé, éventuellement substitué, ou
     un cycle carboné (ii), saturé ou non, éventuellement substitué ou aromatique, ou
     un hétérocycle (iii), saturé ou non, éventuellement substitué ou aromatique,
     ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy (-O2CR), carbamoyle (-CONR2), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR2), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),

R représentant un groupe alkyle ou aryle.

**2.** Procédé selon la revendication 1 pour lequel la polymérisation radicalaire contrôlée s'effectue avec un agent de contrôle de formule (I) :

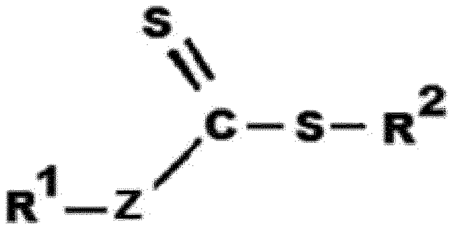

formule (I)

dans laquelle

- Z=O, S ou N,
- $R^1$ et $R^2$, identiques ou différents, représentent :

un groupe (i) alkyle linéaire ou ramifié comprenant de 1 à 20 carbones, de préférence de 1 à 10 carbones, éventuellement substitué, acyle linéaire ou ramifié comprenant de 1 à 20 carbones, de préférence de 1 à 10 carbones, éventuellement substitué, alcényle linéaire ou ramifié comprenant de 2 à 20 carbones, de préférence de 2 à 10 carbones, éventuellement substitué, ou alcynyle linéaire ou ramifié comprenant de 2 à 20 carbones, de préférence de 2 à 10 carbones, éventuellement substitué, ou
un cycle carboné (ii), saturé ou non, éventuellement substitué ou aromatique, comprenant de 4 à 7 carbones, préférentiellement de 5 à 6 carbones ou
un hétérocycle (iii), saturé ou non, éventuellement substitué ou aromatique, comprenant 1,2 ou 3 hétéroatomes choisis parmi O,N ou S, et de 3 à 6 carbones, préférentiellement de 4 à 5 carbones,
ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),
R représentant un groupe alkyle linéaire ou ramifié comprenant de 1 à 20 carbones, de préférences de 1 à 10 carbones, ou aryle comprenant de 6 à 10 atomes de carbone.

**3.** Procédé selon la revendication 2 pour lequel dans la formule (I) Z = O.

**4.** Procédé selon la revendication 3 pour lequel dans la formule (I)

- $R^1$ et $R^2$, identiques ou différents, représentent un groupe (i) alkyle linéaire ou ramifié comprenant de 1 à 20 carbones, de préférence de 1 à 10 carbones, acyle linéaire ou ramifié comprenant de 1 à 20 carbones, de préférence de 1 à 10 carbones, alcényle linéaire ou ramifié comprenant de 2 à 20 carbones, de préférence de 2 à 10 carbones, ou alcynyle linéaire ou ramifié comprenant de 2 à 20 carbones, de préférence de 2 à 10 carbones, ces groupes étant éventuellement substitués par un ou des groupes aromatiques substitués comprenant 4 à 7 carbones ou des groupes alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),

R représentant un groupe alkyle linéaire ou ramifié comprenant de 1 à 20 carbones, de préférences de 1 à 10 carbones, ou aryle comprenant de 6 à 10 atomes de carbone.

**5.** Procédé selon l'une quelconque des revendications précédentes pour lequel la polymérisation radicalaire contrôlée s'effectue avec un agent de contrôle de formule (II) :

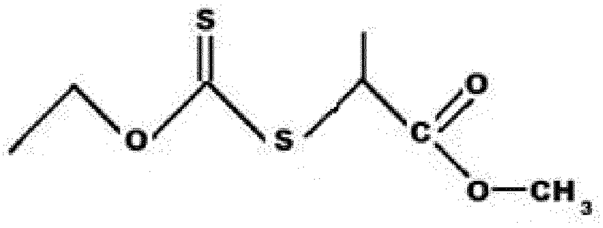

Formule (II)

**6.** Procédé selon l'une quelconque des revendications précédentes pour lequel l'effluent est :

- Un effluent d'extraction minière provenant des mines de charbon, des mines de diamant, des mines de phosphate, des mines de métal comme l'aluminium, le platine, le fer, l'or, le cuivre, argent ; ou
- Un effluent d'extraction minière de sable bitumineux ou de sable pétrolifère ; ou
- Un effluent comprenant de 5 à 70 % en masse, de préférence de 20 à 50 % en masse, plus préférentiellement de 30 à 40 % en masse, de particules solides ; ou
- Un effluent comprenant du sable, de l'argile et de l'eau ; ou
- Un effluent comprenant du sable, de l'argile, de l'eau et du bitume résiduel ; ou
- Un effluent comprenant des résidus frais ; ou
- Un effluent comprenant des résidus fins ; ou
- Un effluent comprenant des résidus fins frais (RFF ou FFT pour fresh fine tailings) ; ou
- Un effluent comprenant des résidus fins mûrs (RFM ou MFT pour mature fine tailings).

**7.** Procédé selon l'une quelconque des revendications précédentes pour lequel ledit polymère a une viscosité UL comprise entre 2,5 et 4,2 cps.

**8.** Procédé selon l'une quelconque des revendications précédentes pour lequel le monomère non-ionique est choisi l'acrylamide, le méthacrylamide ; le N-isopropylacrylamide ; le N,N-diméthylacrylamide ; le N, N diéthylacrylamide ; le N-méthylolacrylamide ; la N-vinylformamide ; le N-vinyl acetamide ; la N-vinylpyridine ; la N-vinylpyrrolidone ; l'acryloyl morpholine (ACMO), le méthacrylate de glycidyle, le méthacrylate de glycéryle et la diacétone acrylamide.

**9.** Procédé selon l'une quelconque des revendications précédentes pour lequel le monomère anionique est choisi parmi l'acide acrylique ; l'acide méthacrylique ; l'acide itaconique ; l'acide crotonique ; l'acide maléique ; l'acide fumarique ; l'acide 2-acrylamido 2-méthylpropane sulfonique ; l'acide vinylsulfonique ; l'acide vinylphosphonique ; l'acide allylsulfonique ; l'acide allylphosphonique ; l'acide styrène sulfonique, ledit monomère anionique étant non salifié, partiellement ou totalement salifié, et les sels du méthacrylate de 3-sulfopropyle.

**10.** Procédé selon l'une quelconque des revendications précédentes pour lequel le polymère est obtenu à partir d'acrylamide et d'acide acrylique.

**11.** Utilisation pour traiter un effluent aqueux comprenant des particules solides, d'au moins un polymère hydrosoluble comprenant au moins un monomère non ionique et au moins un monomère anionique obtenu par polymérisation radicalaire contrôlée, ladite polymérisation radicalaire contrôlée étant une polymérisation par transfert de chaîne par addition-fragmentation réversible, RAFT (Reversible Addition Fragmentation chain Transfer Polymerization) s'effectuant avec un agent de contrôle de formule (I) :

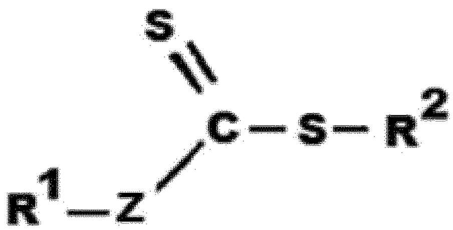

formule (I)

dans laquelle

- Z= O, S ou N,
- R1 et R2, identiques ou différents, représentent :

un groupe (i) alkyle, acyle, alcényle ou alcynyle, linéaire ou réticulé, éventuellement substitué, ou
un cycle carboné (ii), saturé ou non, éventuellement substitué ou aromatique, ou
un hétérocycle (iii), saturé ou non, éventuellement substitué ou aromatique,
ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy (-O2CR), carbamoyle (-CONR2), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR2), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires),
R représentant un groupe alkyle ou aryle, et
ledit polymère ayant une viscosité UL comprise entre 2 et 4,5 cps.

**12.** Composition comprenant un effluent aqueux comprenant des particules solides, au moins un polymère hydrosoluble comprenant au moins un monomère non ionique et au moins un monomère anionique obtenu par polymérisation radicalaire contrôlée, ladite polymérisation radicalaire contrôlée étant une polymérisation par transfert de chaîne par addition-fragmentation réversible, RAFT (Reversible Addition Fragmentation chain Transfer Polymerization) s'effectuant avec un agent de contrôle de formule (I) :

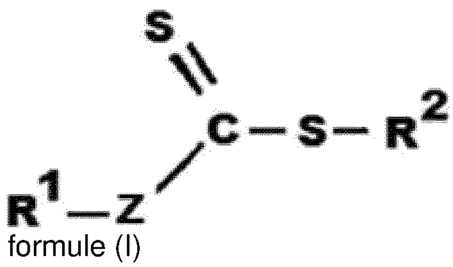

formule (I)

dans laquelle

- Z= O, S ou N,
- R1 et R2, identiques ou différents, représentent :

un groupe (i) alkyle, acyle, alcényle ou alcynyle, linéaire ou réticulé, éventuellement substitué, ou
un cycle carboné (ii), saturé ou non, éventuellement substitué ou aromatique, ou
un hétérocycle (iii), saturé ou non, éventuellement substitué ou aromatique,
ces groupes et cycles (i), (ii) et (iii) pouvant être substitués par des groupes aromatiques substitués ou des groupes alkoxycarbonyle ou aryloxycarbonyle (-COOR), carboxy (-COOH), acyloxy (-O2CR), carbamoyle (-CONR2), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR2), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP),

les substituants cationiques (sels d'ammonium quaternaires),
R représentant un groupe alkyle ou aryle, et
ledit polymère ayant une viscosité UL comprise entre 2 et 4,5 cps.

## Patentansprüche

1. Behandlungsverfahren eines wässrigen Abflusses, umfassend feste Teilchen, umfassend ein Hinzufügen mindestens eines wasserlöslichen Polymer zu dem Abfluss, umfassend mindestens ein nichtionisches Monomer und mindestens ein anionisches Monomer, das durch kontrollierte radikalische Polymerisation erlangt wird, wobei das Polymer eine Viskosität UL zwischen 2 und 4,5 cps umfasst,

   wobei die kontrollierte radikalische Polymerisation eine reversible Additions-Fragmentierungs-Kettenübertragungs-Polymerisation, RAFT, (Reversible Addition Fragmentation chain Transfer Polymerization) ist, und wobei die kontrollierte radikalische Polymerisation mit einem Steuerungsmittel von Formel (I) durchgeführt wird:

   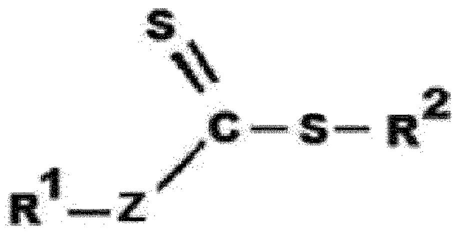

   Formel (I)

   wobei

   - Z = O, S oder N,
   - $R^1$ und $R^2$, die gleich oder verschieden sind, Folgendes darstellen:

     eine optional substituierte, lineare oder vernetzte Alkyl-, Acyl-, Alkenyl- oder Alkinylgruppe (i), oder
     einen gesättigten oder ungesättigten, optional substituierten oder aromatischen Kohlenstoffcyclus (ii), oder
     einen gesättigten oder ungesättigten, optional substituierten oder aromatischen Heterocyclus (iii),
     wobei diese Gruppen und Cyclen (i), (ii) und (iii) mit substituierten aromatischen Gruppen oder den Alkoxycarbonyl- oder Aryloxycarbonylgruppen (-COOR), Carboxy (-COOH), Acyloxy (-O2CR), Carbamoyl (-CONR2), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR2), Halogen, Allyl, Epoxy, Alkoxy (-OR), S-Alkyl, S-Aryl, Gruppen, die einen hydrophilem oder ionischem Charakter aufweisen, wie beispielsweise Alkalisalze von Carbonsäuren, Alkalisalze von Sulfonsäuren, Polyalkylenoxidketten (POE, POP), kationische Substituenten (quaternäre Ammoniumsalze) substituiert sein können,
     R eine Alkyl- oder Arylgruppe darstellt.

2. Verfahren nach Anspruch 1, wobei die kontrollierte radikalische Polymerisation mit einem Steuerungsmittel von Formel (I) durchgeführt wird:

   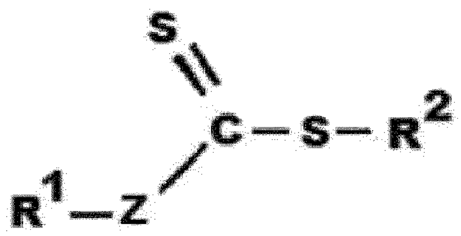

   Formel (I)

wobei

- Z = O, S oder N,
- $R^1$ und $R^2$, die gleich oder verschieden sind, Folgendes darstellen:

eine Gruppe (i) lineares oder verzweigtes Alkyl umfassend 1 bis 20 Kohlenstoffe, vorzugsweise 1 bis 10 Kohlenstoffe, optional substituiert, lineares oder verzweigtes Acyl umfassend 1 bis 20 Kohlenstoffe, vorzugsweise 1 bis 10 Kohlenstoffe, optional substituiert, lineares oder verzweigtes Alkenyl umfassend 2 bis 20 Kohlenstoffe, vorzugsweise 2 bis 10 Kohlenstoffe, optional substituiert, oder lineares oder verzweigtes Alkinyl umfassend 2 bis 20 Kohlenstoffe, vorzugsweise 2 bis 10 Kohlenstoffe, optional substituiert, oder einen gesättigten oder ungesättigten, optional substituierten oder aromatischen Kohlenstoffcyclus (ii), umfassend 4 bis 7 Kohlenstoffe, vorzugsweise 5 bis 6 Kohlenstoffe, oder

einen gesättigten oder ungesättigten, optional substituierten oder aromatischen Heterocyclus (iii), umfassend 1, 2 oder 3 Heteroatome, ausgewählt aus O, N oder S, und 3 bis 6 Kohlenstoffe, vorzugsweise 4 bis 5 Kohlenstoffe,

wobei diese Gruppen und Cyclen (i), (ii) und (iii) mit substituierten aromatischen Gruppen oder den Alkoxycarbonyl- oder Aryloxycarbonylgruppen (-COOR), Carboxy (-COOH), Acyloxy ($-O_2CR$), Carbamoyl ($-CONR_2$), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino ($-NR_2$), Halogen, Allyl, Epoxy, Alkoxy (-OR), S-Alkyl, S-Aryl, Gruppen, die einen hydrophilem oder ionischem Charakter aufweisen, wie beispielsweise Alkalisalze von Carbonsäuren, Alkalisalze von Sulfonsäuren, Polyalkylenoxidketten (POE, POP), kationische Substituenten (quaternäre Ammoniumsalze) substituiert sein können,

R eine lineare oder verzweigte Alkylgruppe umfassend 1 bis 20 Kohlenstoffe, vorzugsweise 1 bis 10 Kohlenstoffe, oder eine Arylgruppe umfassend 6 bis 10 Kohlenstoffatome darstellt.

**3.** Verfahren nach Anspruch 2, wobei in Formel (I) Z = O.

**4.** Verfahren nach Anspruch 3, wobei in Formel (I)

- $R^1$ und $R^2$, die gleich oder verschieden sind, die eine Gruppe (i) lineares oder verzweigtes Alkyl umfassend 1 bis 20 Kohlenstoffe, vorzugsweise 1 bis 10 Kohlenstoffe, lineares oder verzweigtes Acyl umfassend 1 bis 20 Kohlenstoffe, vorzugsweise 1 bis 10 Kohlenstoffen, lineares oder verzweigtes Alkenyl umfassend 2 bis 20 Kohlenstoffe, vorzugsweise 2 bis 10 Kohlenstoffen, oder lineares oder verzweigtes Alkinyl umfassend 2 bis 20 Kohlenstoffe, vorzugsweise 2 bis 10 Kohlenstoffen darstellen, wobei diese Gruppen optional mit einer oder mehreren substituierten aromatischen Gruppen umfassend 4 bis 7 Kohlenstoffe oder den Gruppen Alkoxycarbonyl oder Aryloxycarbonylgruppen (-COOR), Carboxy (-COOH), Acyloxy ($-O_2CR$), Carbamoyl ($-CONR_2$), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino ($-NR_2$), Halogen, Allyl, Epoxy, Alkoxy (-OR), S-Alkyl, S-Aryl, Gruppen, die einen hydrophilem oder ionischem Charakter aufweisen, wie beispielsweise Alkalisalze von Carbonsäuren, Alkalisalze von Sulfonsäuren, Polyalkylenoxidketten (POE, POP), kationische Substituenten (quaternäre Ammoniumsalze) substituiert sind,

R eine lineare oder verzweigte Alkylgruppe umfassend 1 bis 20 Kohlenstoffe, vorzugsweise 1 bis 10 Kohlenstoffe, oder eine Arylgruppe umfassend 6 bis 10 Kohlenstoffatome darstellt.

**5.** Verfahren nach einem der vorherigen Ansprüche, wobei die kontrollierte radikalische Polymerisation mit einem Steuerungsmittel von Formel (II) durchgeführt wird:

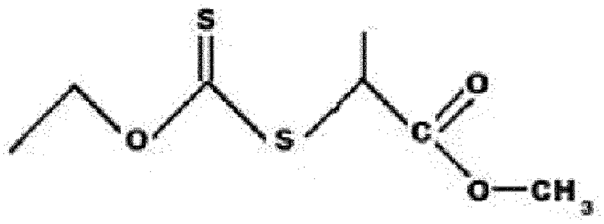

Formel (II)

**6.** Verfahren nach einem der vorherigen Ansprüche, wobei der Abfluss wie folgt ist:

- ein Abfluss aus Bergbau aus Kohlebergwerken, Diamantbergwerken, Phosphatbergwerken, Metallbergwerken, wie beispielsweise Aluminium, Platin, Eisen, Gold, Kupfer, Silber; oder
- ein Abfluss aus Bergbau von Ölsand oder ölhaltigem Sand; oder
- ein Abfluss, umfassend 5 bis 70 Gewichtsprozent, vorzugsweise 20 bis 50 Gewichtsprozent, bevorzugter 30 bis 40 Gewichtsprozent, feste Teilchen; oder
- ein Abfluss, umfassend Sand, Ton und Wasser; oder
- ein Abfluss, umfassend Sand, Ton, Wasser und Restbitumen; oder
- ein Abfluss, umfassend frische Rückstände; oder
- ein Abfluss, umfassend feinkörnige Rückstände; oder
- ein Abfluss, umfassend frische feinkörnige Rückstände (RFF oder FFT für fresh fine tailings); oder
- ein Abfluss, umfassend reife feinkörnige Rückstände (RFM oder MFT für mature fine tailings).

**7.** Verfahren nach einem der vorherigen Ansprüche, wobei das Polymer eine Viskosität UL zwischen 2,5 und 4,2 cps aufweist.

**8.** Verfahren nach einem der vorherigen Ansprüche, wobei das nichtionische Monomer ausgewählt ist aus Acrylamid, Methacrylamid; N-Isopropylacrylamid; N,N-Dimethylacrylamid; N, N-Diethylacrylamid; N-Methylolacrylamid; N-Vinylformamid; N-Vinylacetamid; N-Vinylpyridin; N-Vinylpyrrolidon; Acryloylmorpholin (ACMO), Glycidylmethacrylat, Glycerylmethacrylat und Diacetonacrylamid.

**9.** Verfahren nach einem der vorherigen Ansprüche, wobei das anionische Monomer ausgewählt ist aus Acrylsäure; Methacrylsäure; Itaconsäure; Crotonsäure; Maleinsäure; Fumarsäure; 2-Acrylamido-2-methylpropansulfonsäure; Vinylsulfonsäure; Vinylphosphonsäure; Allylsulfonsäure; Allylphosphonsäure; Styrolsulfonsäure, wobei das anionische Monomer ungesalzen, teilweise oder vollständig gesalzen ist, und den Salzen von 3-Sulfopropylmethacrylat.

**10.** Verfahren nach einem der vorherigen Ansprüche, wobei dem das Polymer aus Acrylamid und Acrylsäure erlangt wird.

**11.** Verwendung, zur Behandlung eines wässrigen Abflusses umfassend feste Teilchen, mindestens eines wasserlöslichen Polymers, umfassend mindestens ein nicht-ionisches Monomer und mindestens ein anionisches Monomer, das durch kontrollierte radikalische Polymerisation erlangt wird, wobei die kontrollierte radikalische Polymerisation eine reversible Additions-Fragmentierungs-Kettenübertragungs-Polymerisation, RAFT, (Reversible Addition Fragmentation chain Transfer Polymerization) ist, die mit einem Steuerungsmittel von Formel (I) durchgeführt wird:

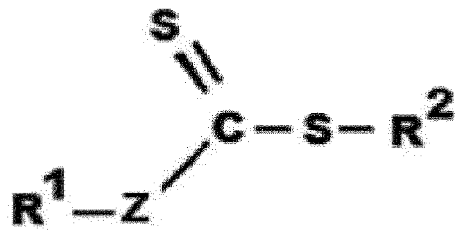

Formel (I)

wobei

- Z = O, S oder N,
- R1 und R2, die gleich oder verschieden sind, Folgendes darstellen:

eine optional substituierte, lineare oder vernetzte Alkyl-, Acyl-, Alkenyl- oder Alkinylgruppe (i), oder
einen gesättigten oder ungesättigten, optional substituierten oder aromatischen Kohlenstoffcyclus (ii), oder
einen gesättigten oder ungesättigten, optional substituierten oder aromatischen Heterocyclus (iii),
wobei diese Gruppen und Cyclen (i), (ii) und (iii) mit substituierten aromatischen Gruppen oder den Alkoxycarbonyl- oder Aryloxycarbonylgruppen (-COOR), Carboxy (-COOH), Acyloxy (-O2CR), Carbamoyl (-CONR2), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR2), Halogen, Allyl, Epoxy, Alkoxy

(-OR), S-Alkyl, S-Aryl, Gruppen, die einen hydrophilem oder ionischem Charakter aufweisen, wie beispielsweise Alkalisalze von Carbonsäuren, Alkalisalze von Sulfonsäuren, Polyalkylenoxidketten (POE, POP), kationische Substituenten (quaternäre Ammoniumsalze) substituiert sein können,
wobei R eine Alkyl- oder Arylgruppe darstellt, und
wobei das Polymer eine Viskosität UL zwischen 2 und 4,5 cps aufweist.

**12.** Zusammensetzung, umfassend einen wässrigen Abfluss, umfassend feste Teilchen, mindestens ein wasserlösliches Polymer, umfassend mindestens ein nicht-ionisches Monomer und mindestens ein anionisches Monomer, das durch kontrollierte radikalische Polymerisation erlangt wird, wobei die kontrollierte radikalische Polymerisation eine reversible Additions-Fragmentierungs-Kettenübertragungs-Polymerisation, RAFT, (Reversible Addition Fragmentation chain Transfer Polymerization) ist, die mit einem Steuerungsmittel von Formel (I) durchgeführt wird:

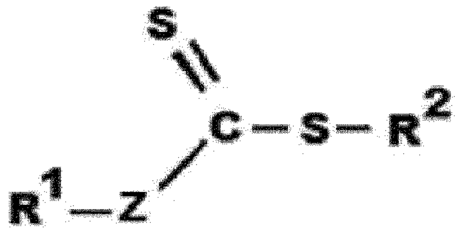

Formel (I)

wobei

- Z = O, S oder N,
- R1 und R2, die gleich oder verschieden sind, Folgendes darstellen:

eine optional substituierte, lineare oder vernetzte Alkyl-, Acyl-, Alkenyl- oder Alkinylgruppe (i), oder
einen gesättigten oder ungesättigten, optional substituierten oder aromatischen Kohlenstoffcyclus (ii), oder
einen gesättigten oder ungesättigten, optional substituierten oder aromatischen Heterocyclus (iii),
wobei diese Gruppen und Cyclen (i), (ii) und (iii) mit substituierten aromatischen Gruppen oder den Alkoxycarbonyl- oder Aryloxycarbonylgruppen (-COOR), Carboxy (-COOH), Acyloxy (-O2CR), Carbamoyl (-CONR2), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR2), Halogen, Allyl, Epoxy, Alkoxy (-OR), S-Alkyl, S-Aryl, Gruppen, die einen hydrophilem oder ionischem Charakter aufweisen, wie beispielsweise Alkalisalze von Carbonsäuren, Alkalisalze von Sulfonsäuren, Polyalkylenoxidketten (POE, POP), kationische Substituenten (quaternäre Ammoniumsalze) substituiert sein können,
wobei R eine Alkyl- oder Arylgruppe darstellt, und
wobei das Polymer eine Viskosität UL zwischen 2 und 4,5 cps aufweist.

## Claims

**1.** An effluent treatment method for treating an aqueous effluent that contains solid particles, the method including the addition to the effluent of at least one water-soluble polymer comprising at least one non-ionic monomer and at least one anionic monomer obtained by controlled radical polymerization, the said polymer having a UL viscosity of between 2 and 4.5 cps,

wherein the controlled radical polymerization is a polymerization by reversible addition-fragmentation chain transfer, RAFT (Reversible Addition Fragmentation Chain Transfer Polymerization), and
wherein the controlled radical polymerization is carried out with a control agent having the formula (I):

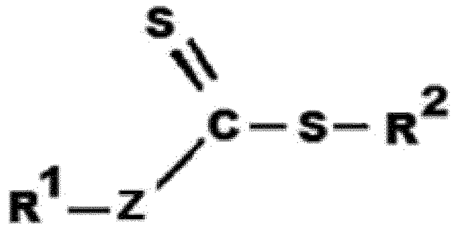

formula (I)

in which

- Z = O, S or N ;
- R1 and R2, being identical or different, represent:

a group (i): alkyl, acyl, alkenyl or alkynyl, linear or crosslinked, optionally substituted ; or
a carbon ring (ii), either saturated or unsaturated, optionally substituted or aromatic ; or
a heterocycle (iii), either saturated or unsaturated, optionally substituted or aromatic, it being possible for these groups and rings (i), (ii), and (iii) to be substituted by substituted aromatic groups ; or the groups: alkoxycarbonyl or aryloxycarbonyl (-COOR), carboxy (- COOH), acyloxy (-O2CR), carbamoyl (-CONR2), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino (-NR2), halogen, allyl, epoxy, alkoxy (-OR), S-alkyl, S-aryl ; groups that are hydrophilic or ionic in nature such as the alkali salts of carboxylic acids, the alkali salts of sulfonic acid, polyalkylene oxide chains (polyoxyethylene POE, polyoxypropylene POP), cationic substituents (quaternary ammonium salts), R representing an alkyl or aryl group.

**2.** A method according to claim 1, wherein the controlled radical polymerization is carried out with a control agent having the formula (I):

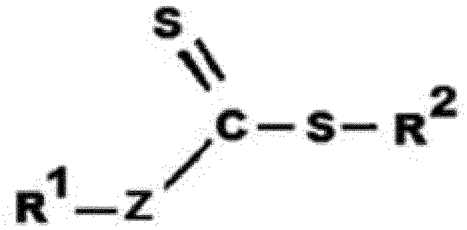

formula (I)

in which

- Z = O, S or N;
- $R^1$ and $R^2$, being identical or different, represent:

o a group (i): linear or branched alkyl comprising from 1 to 20 carbons, preferably from 1 to 10 carbons, optionally substituted; linear or branched acyl comprising from 1 to 20 carbons, preferably from 1 to 10 carbons, optionally substituted; linear or branched alkenyl comprising from 2 to 20 carbons, preferably from 2 to 10 carbons, optionally substituted; or linear or branched alkynyl comprising from 2 to 20 carbons, preferably from 2 to 10 carbons, optionally substituted; or
o a carbon ring (ii), either saturated or unsaturated, optionally substituted or aromatic, comprising from 4 to 7 carbons, preferentially from 5 to 6 carbons; or
o a heterocycle (iii), either saturated or unsaturated, optionally substituted or aromatic, comprising 1, 2 or 3 heteroatoms selected from O, N or S, and from 3 to 6 carbons, preferentially from 4 to 5 carbons;

it being possible for these groups and rings (i), (ii), and (iii) to be substituted by substituted aromatic groups; or the groups: alkoxycarbonyl or aryloxycarbonyl (-COOR), carboxy (- COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino ($-NR_2$), halogen, allyl, epoxy, alkoxy (-OR), S-alkyl, S-aryl; groups that are hydrophilic or ionic in nature such as the alkali salts of carboxylic acids, the alkali salts of sulfonic acid, polyalkylene oxide chains (polyoxyethylene POE, polyoxypropylene POP), cationic substituents (quaternary ammonium salts);
R representing a linear or branched alkyl group comprising from 1 to 20 carbons, preferably from 1 to 10 carbons, or aryl comprising from 6 to 10 carbon atoms.

**3.** A method according to claim 2 wherein in formula (I) Z = O.

**4.** A method according to claim 3 wherein in formula (I)

- $R^1$ and $R^2$, being identical or different, represent a group (i): linear or branched alkyl comprising from 1 to 20 carbons, preferably from 1 to 10 carbons; linear or branched acyl comprising from 1 to 20 carbons, preferably from 1 to 10 carbons; linear or branched alkenyl comprising from 2 to 20 carbons, preferably from 2 to 10 carbons; or linear or branched alkynyl comprising from 2 to 20 carbons, preferably from 2 to 10 carbons; these groups being optionally substituted by one or more substituted aromatic groups comprising from 4 to 7 carbons; or the groups: alkoxycarbonyl or aryloxycarbonyl (-COOR), carboxy (- COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino ($-NR_2$), halogen, allyl, epoxy, alkoxy (-OR), S-alkyl, S-aryl; groups that are hydrophilic or ionic in nature such as the alkali salts of carboxylic acids, the alkali salts of sulfonic acid, polyalkylene oxide chains (polyoxyethylene POE, polyoxypropylene POP), cationic substituents (quaternary ammonium salts);

R representing a group: linear or branched alkyl comprising from 1 to 20 carbons, preferably from 1 to 10 carbons; or aryl comprising from 6 to 10 carbon atoms.

**5.** A method according to any one of the preceding claims, wherein the controlled radical polymerization is carried out with a control agent having the formula (II):

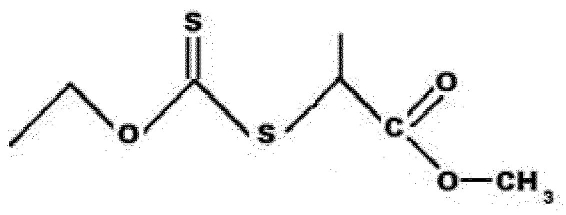

Formula (II)

**6.** A method according to any one of the preceding claims, wherein the effluent is:

- A mining operation effluent, deriving from coal mines, diamond mines, phosphate mines, metal mines such as aluminum, platinum, iron, gold, copper, silver; or
- An effluent from bituminous sands or oil sands mining operations; or
- An effluent that contains from 5 to 70% by mass, preferably from 20 to 50% by mass, more preferentially from 30 to 40% by mass, of solid particles; or
- An effluent that comprises sand, clay and water; or
- An effluent that comprises sand, clay, water and residual bitumen; or
- An effluent that comprises fresh tailings; or
- An effluent that comprises fine tailings; or
- An effluent that comprises fresh fine tailings (FFT or RFF for 'résidus fins frais'); or
- An effluent that comprises mature fine tailings (MFT or RFM for 'résidus fins mûrs').

**7.** A method according to any one of the preceding claims, wherein the said polymer has a UL viscosity of between 2.5 and 4.2 cps.

**8.** A method according to any one of the preceding claims, wherein the non-ionic monomer is selected from acrylamide,

methacrylamide; N-isopropylacrylamide; N,N-dimethylacrylamide; N,N diethylacrylamide; N-methylolacrylamide; N-vinylformamide; N-vinyl acetamide; N-vinylpyridine; N-vinylpyrrolidone; acryloyl morpholine (ACMO), glycidyl methacrylate, glyceryl methacrylate, and diacetone acrylamide.

**9.** A method according to any one of the preceding claims, wherein the anionic monomer is selected from among acrylic acid; methacrylic acid; itaconic acid; crotonic acid; maleic acid; fumaric acid; 2-acrylamido-2-methylpropane sulfonic acid; vinyl sulfonic acid; vinylphosphonic acid; allylsulfonic acid; allylphosphonic acid; styrene sulfonic acid, the said anionic monomer being non-salified, partially or totally salified, and the salts of 3-sulfopropyl methacrylate.

**10.** A method according to any one of the preceding claims, wherein the polymer is obtained from acrylamide and acrylic acid.

**11.** The use for treating an aqueous effluent that contains solid particles, of at least one water-soluble polymer comprising at least one non-ionic monomer and at least one anionic monomer obtained by controlled radical polymerization, said controlled radical polymerization being a polymerization by reversible addition-fragmentation chain transfer, RAFT (Reversible Addition Fragmentation Chain Transfer Polymerization), carried out with a control agent having the formula (I):

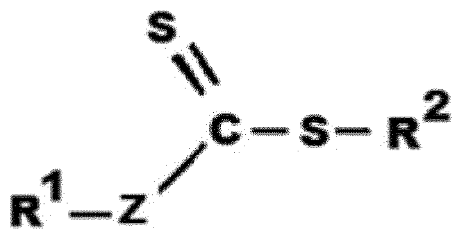

formula (I)

in which

- Z = O, S or N ;
- R1 and R2, being identical or different, represent:

a group (i): alkyl, acyl, alkenyl or alkynyl, linear or crosslinked, optionally substituted ; or
a carbon ring (ii), either saturated or unsaturated, optionally substituted or aromatic ; or
a heterocycle (iii), either saturated or unsaturated, optionally substituted or aromatic, it being possible for these groups and rings (i), (ii), and (iii) to be substituted by substituted aromatic groups ; or the groups: alkoxycarbonyl or aryloxycarbonyl (-COOR), carboxy (- COOH), acyloxy (-O2CR), carbamoyl (-CONR2), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino (-NR2), halogen, allyl, epoxy, alkoxy (-OR), S-alkyl, S-aryl ; groups that are hydrophilic or ionic in nature such as the alkali salts of carboxylic acids, the alkali salts of sulfonic acid, polyalkylene oxide chains (polyoxyethylene POE, polyoxypropylene POP), cationic substituents (quaternary ammonium salts),

R representing an alkyl or aryl group, and the said polymer having a UL viscosity of between 2 and 4.5 cps.

**12.** A composition comprising an aqueous effluent that contains solid particles, at least one water-soluble polymer comprising at least one non-ionic monomer and at least one anionic monomer obtained by controlled radical polymerization, said controlled radical polymerization being a polymerization by reversible addition-fragmentation chain transfer, RAFT (Reversible Addition Fragmentation Chain Transfer Polymerization), carried out with a control agent having the formula (I):

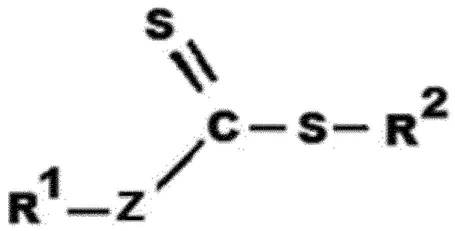

formula (I)

in which

- Z = O, S or N ;
- R1 and R2, being identical or different, represent:

 a group (i): alkyl, acyl, alkenyl or alkynyl, linear or crosslinked, optionally substituted ; or
 a carbon ring (ii), either saturated or unsaturated, optionally substituted or aromatic ; or
 a heterocycle (iii), either saturated or unsaturated, optionally substituted or aromatic, it being possible for these groups and rings (i), (ii), and (iii) to be substituted by substituted aromatic groups ; or the groups: alkoxycarbonyl or aryloxycarbonyl (-COOR), carboxy (- COOH), acyloxy (-O2CR), carbamoyl (-CONR2), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino (-NR2), halogen, allyl, epoxy, alkoxy (-OR), S-alkyl, S-aryl ; groups that are hydrophilic or ionic in nature such as the alkali salts of carboxylic acids, the alkali salts of sulfonic acid, polyalkylene oxide chains (polyoxyethylene POE, polyoxypropylene POP), cationic substituents (quaternary ammonium salts),

R representing an alkyl or aryl group, and the said polymer having a UL viscosity of between 2 and 4.5 cps.

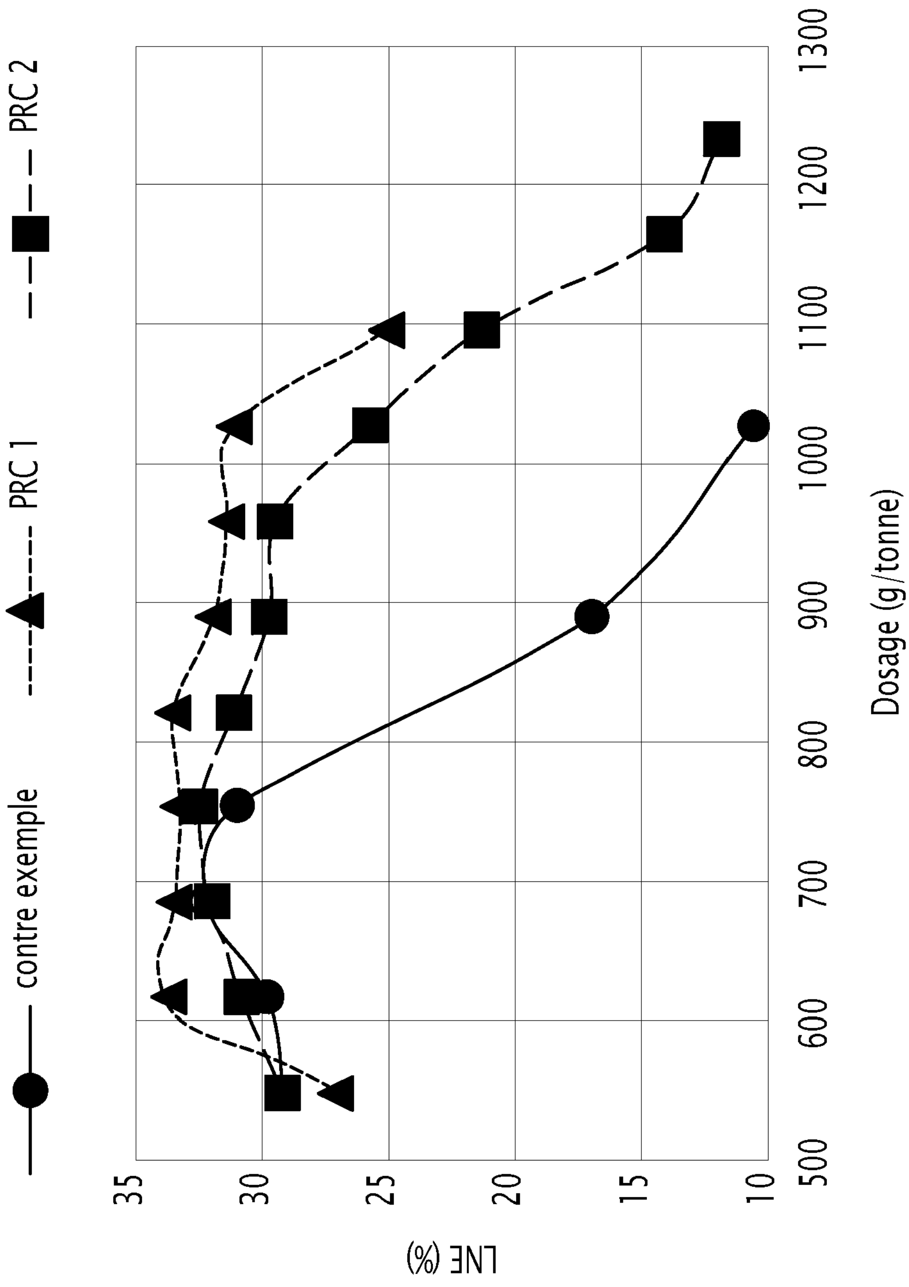
contre exemple
PRC 1
PRC 2
LNE (%)
35
30
25
20
15
10
500
600
700
800
900
1000
1100
1200
1300
Dosage (g/tonne)

FIG.1

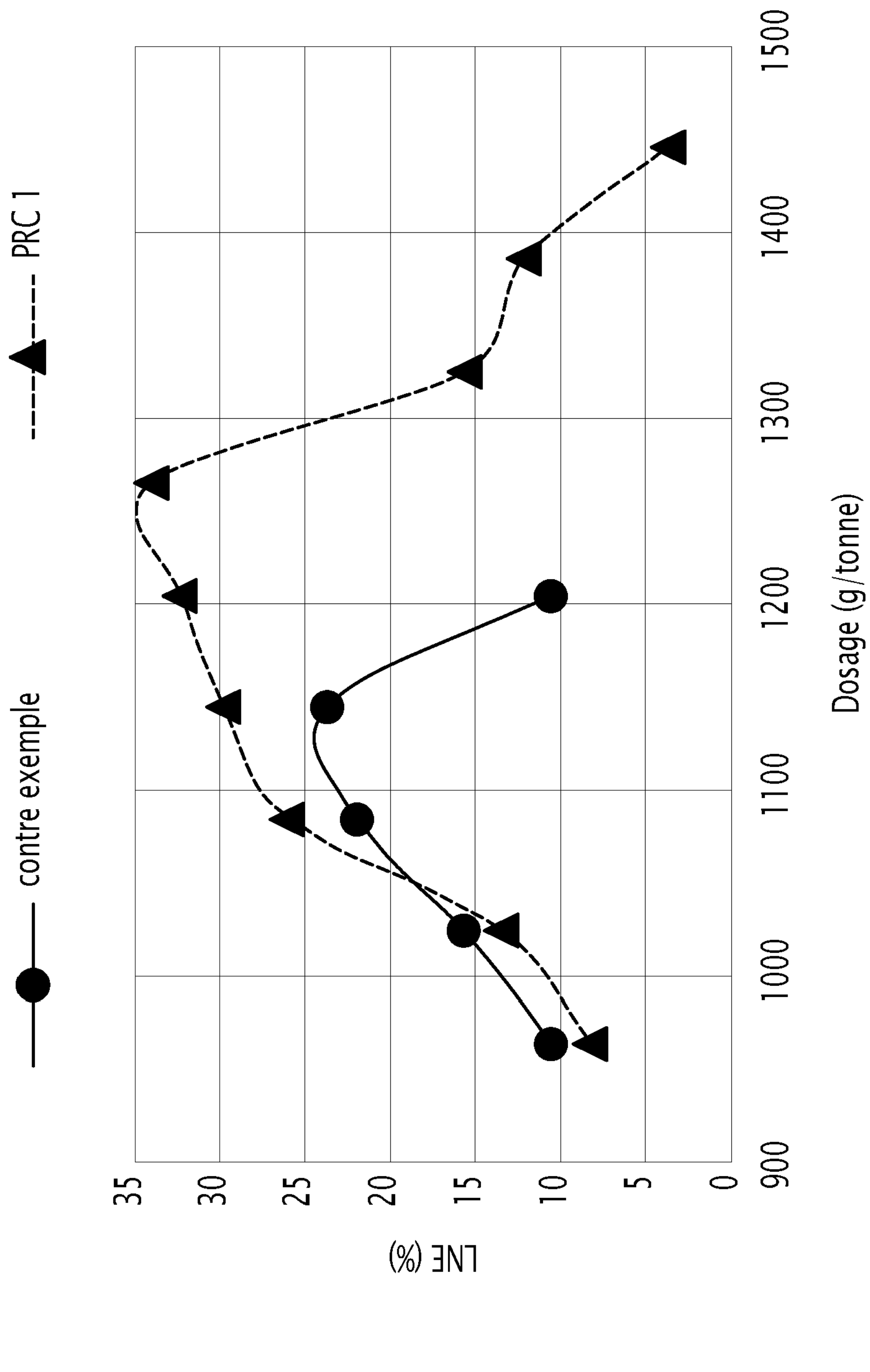
contre exemple
PRC 1
LNE (%)
35
30
25
20
15
10
5
0
900
1000
1100
1200
1300
1400
1500
Dosage (g/tonne)

FIG.2

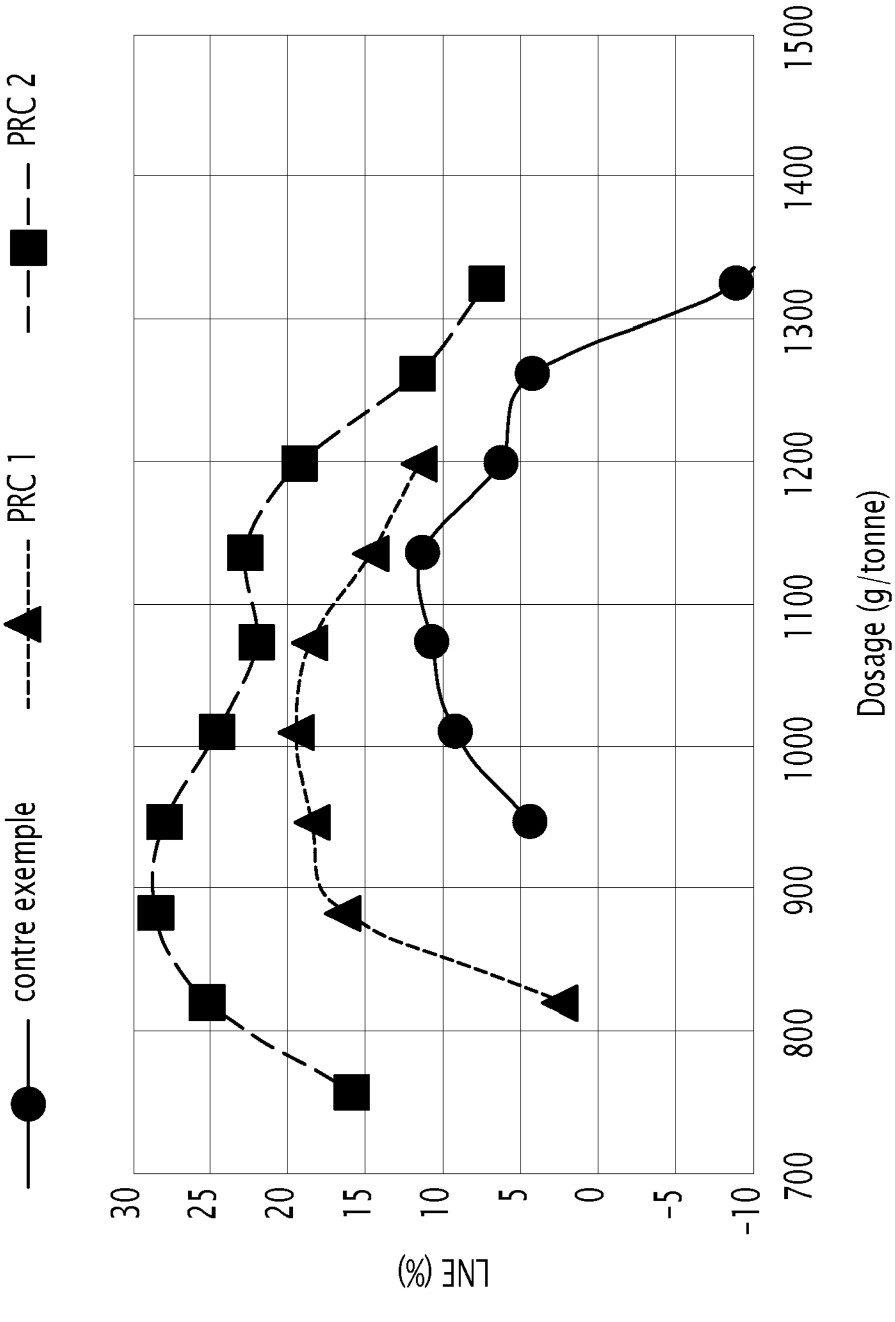
contre exemple
PRC 1
PRC 2
LNE (%)
30
25
20
15
10
5
0
-5
-10
700
800
900
1000
1100
1200
1300
1400
1500
Dosage (g/tonne)

FIG.3

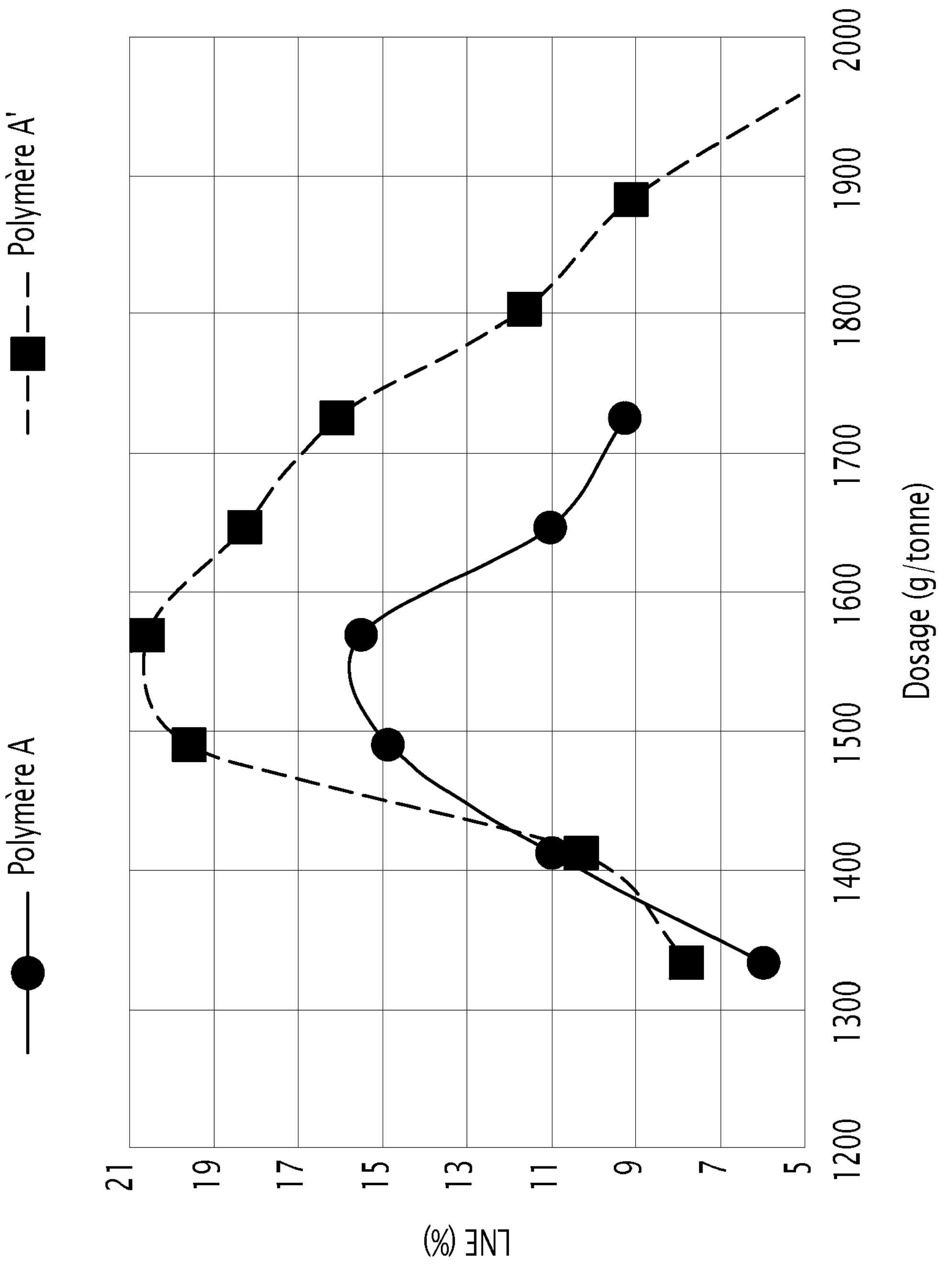
Polymère A
Polymère A'
LNE (%)
21
19
17
15
13
11
9
7
5
1200
1300
1400
1500
1600
1700
1800
1900
2000
Dosage (g/tonne)

FIG.4

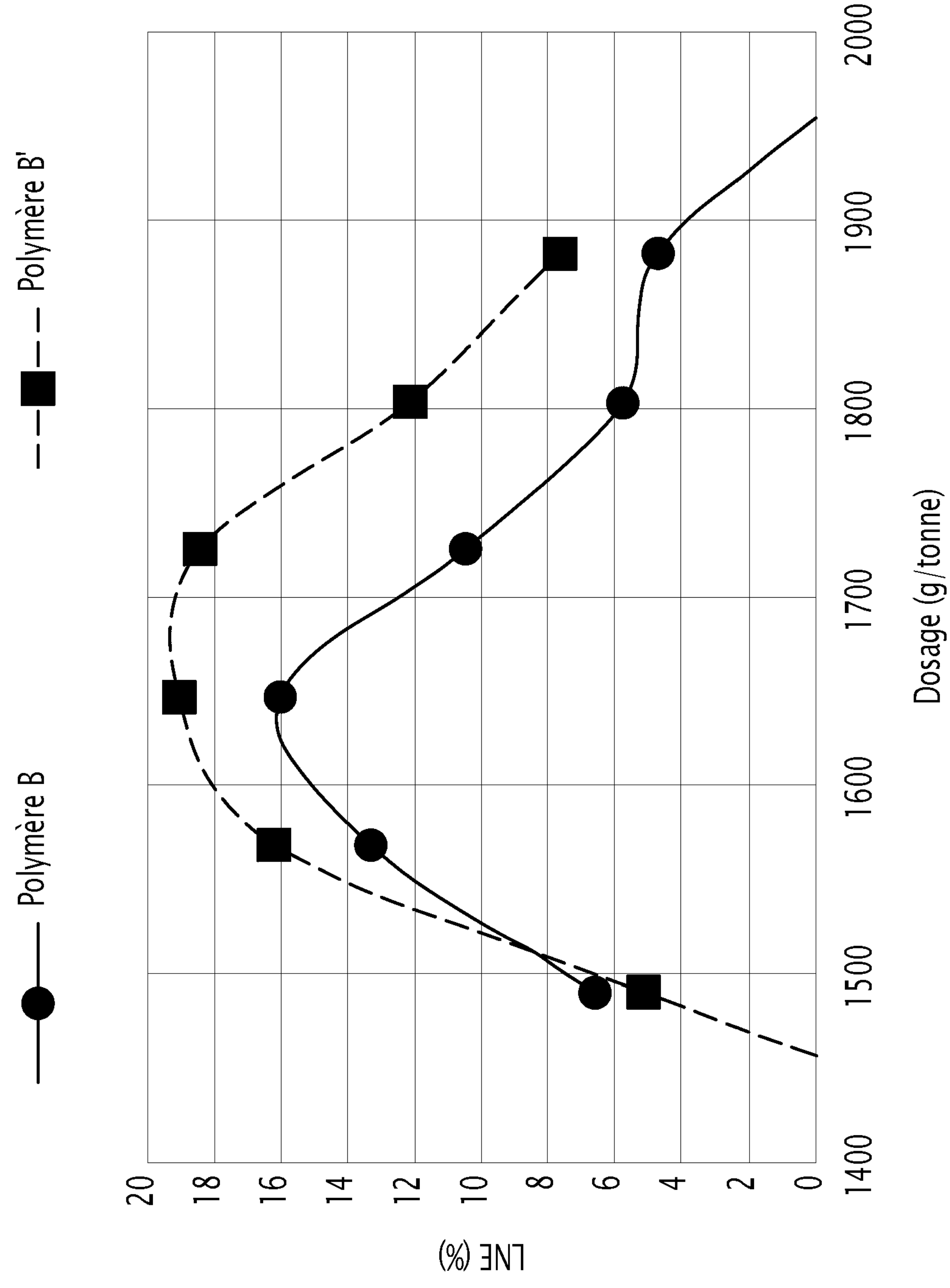

Polymère B
Polymère B'
LNE (%)
20
18
16
14
12
10
8
6
4
2
0
1400
1500
1600
1700
1800
1900
2000
Dosage (g/tonne)


FIG.5

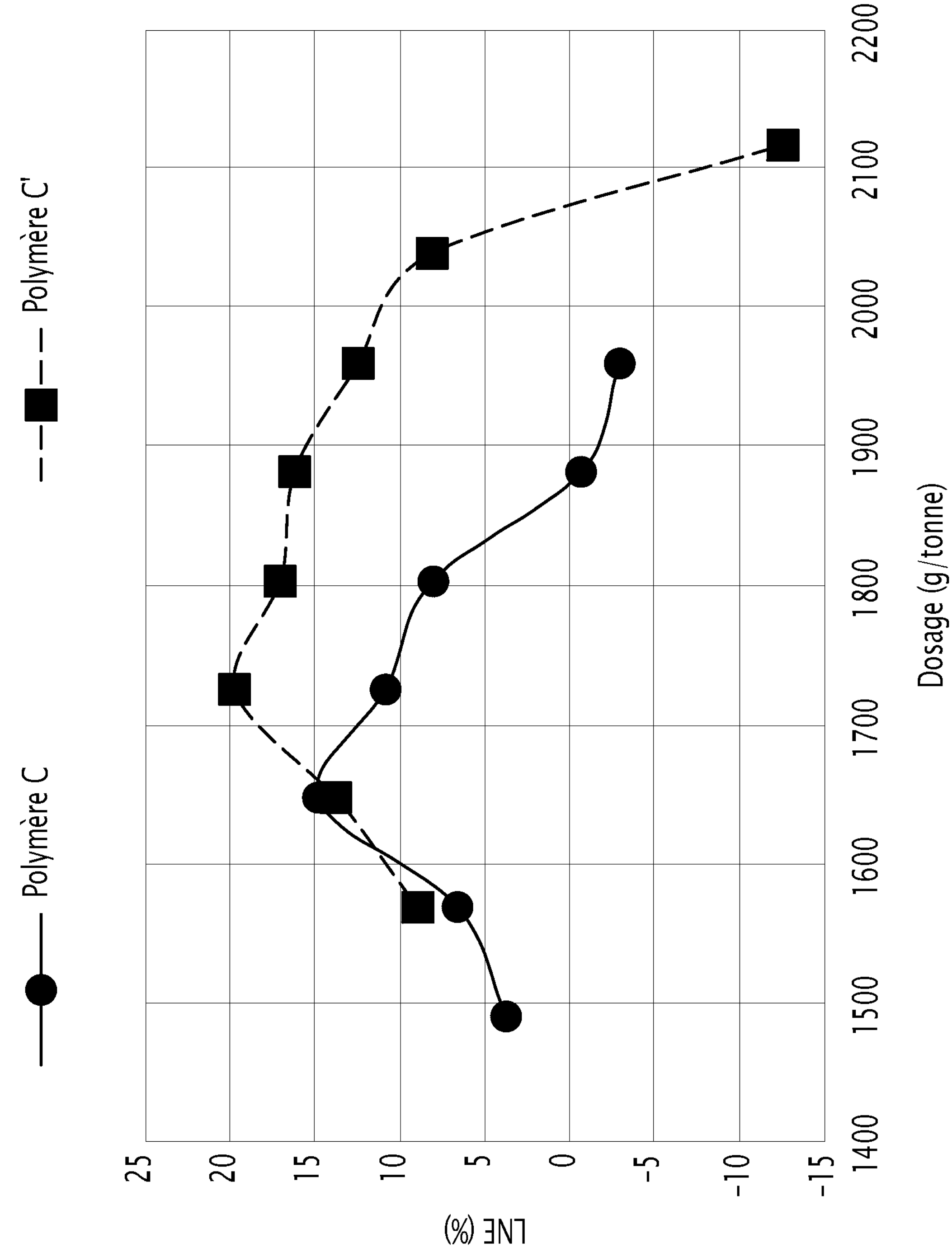
Polymère C
Polymère C'
LNE (%)
25
20
15
10
5
0
-5
-10
-15
1400
1500
1600
1700
1800
1900
2000
2100
2200
Dosage (g/tonne)

FIG.6

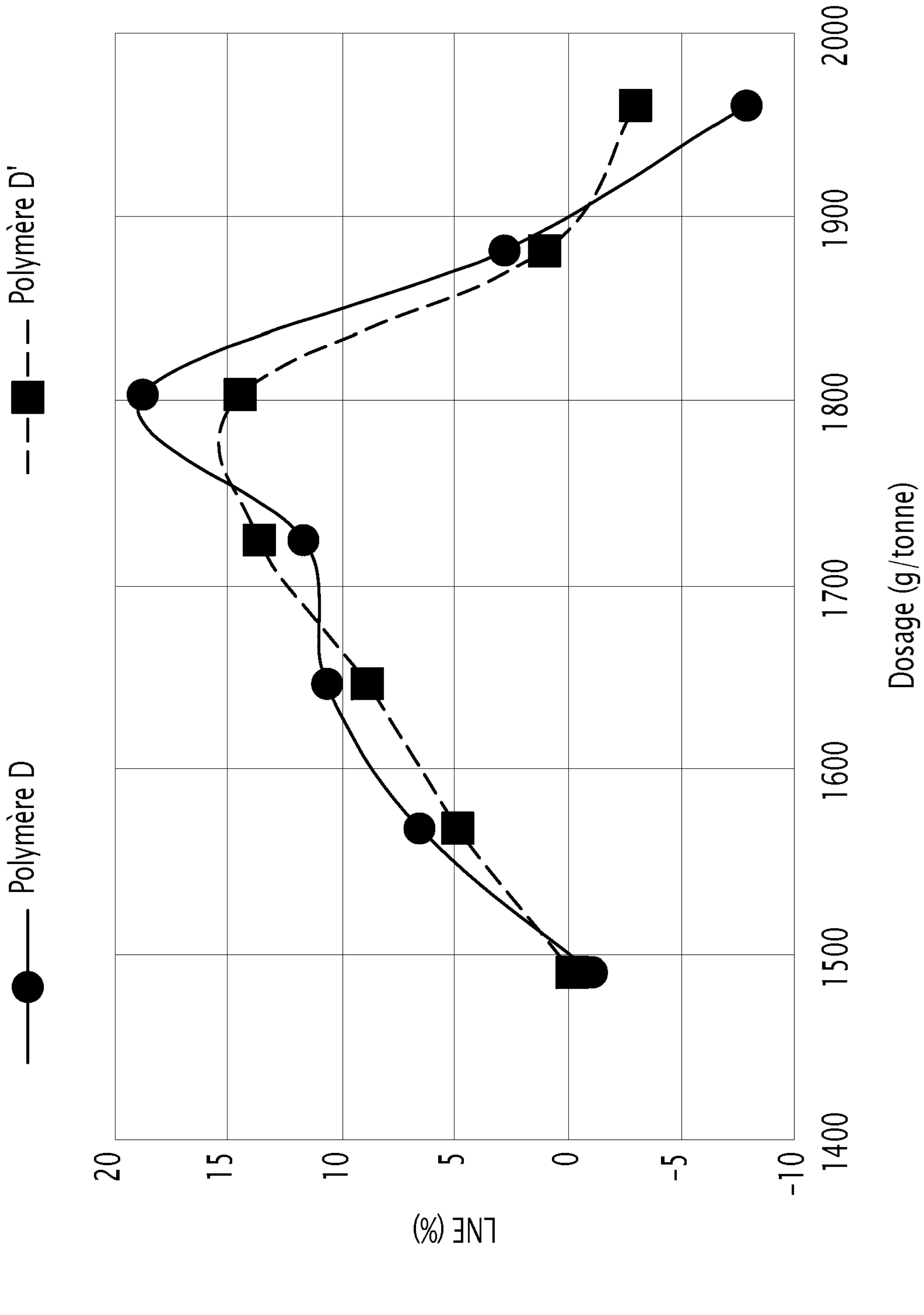
Polymère D
Polymère D'
LNE (%)
20
15
10
5
0
-5
-10
1400
1500
1600
1700
1800
1900
2000
Dosage (g/tonne)

FIG.7

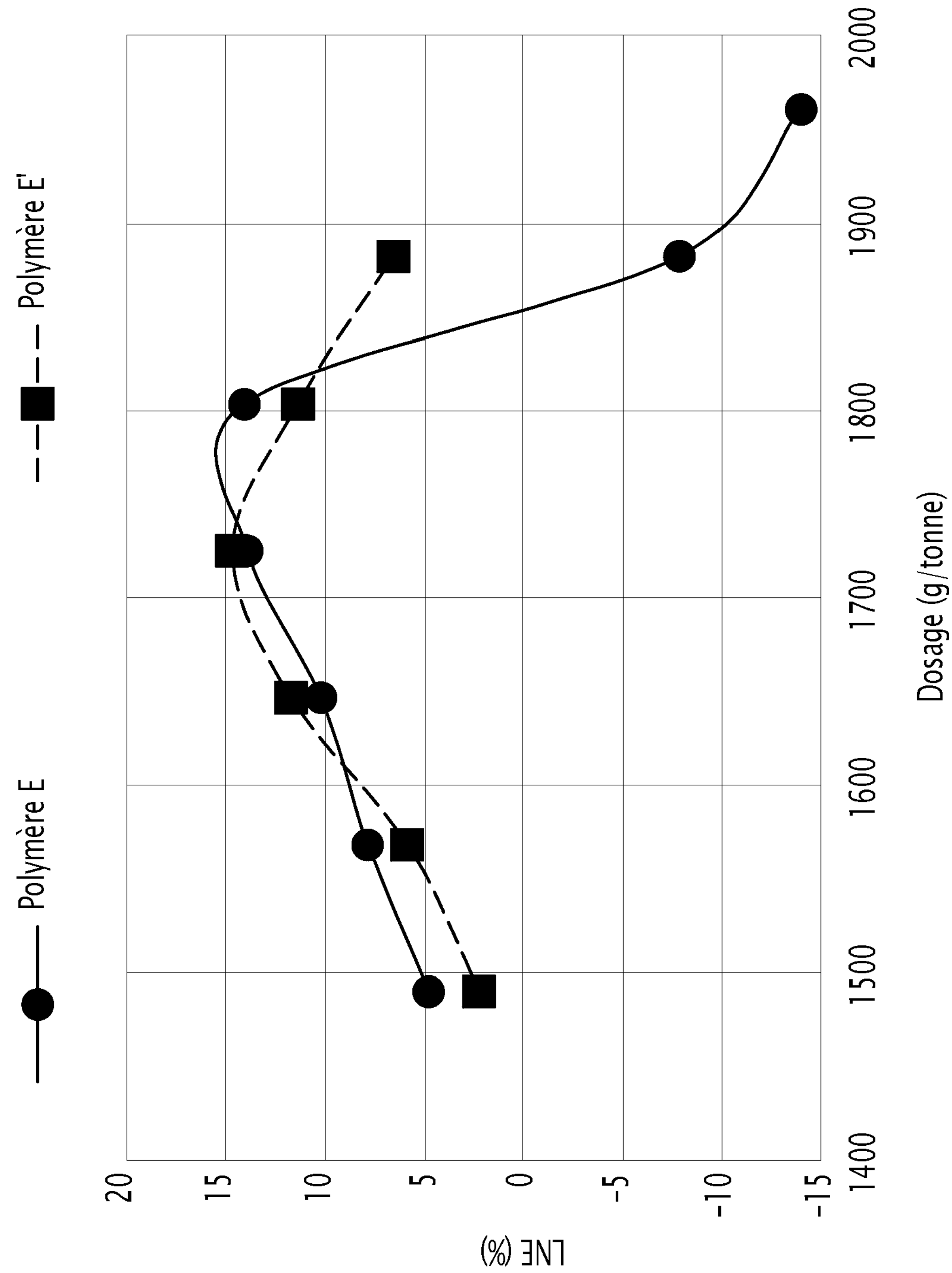
Polymère E
Polymère E'
LNE (%)
20
15
10
5
0
-5
-10
-15
1400
1500
1600
1700
1800
1900
2000
Dosage (g/tonne)

FIG.8

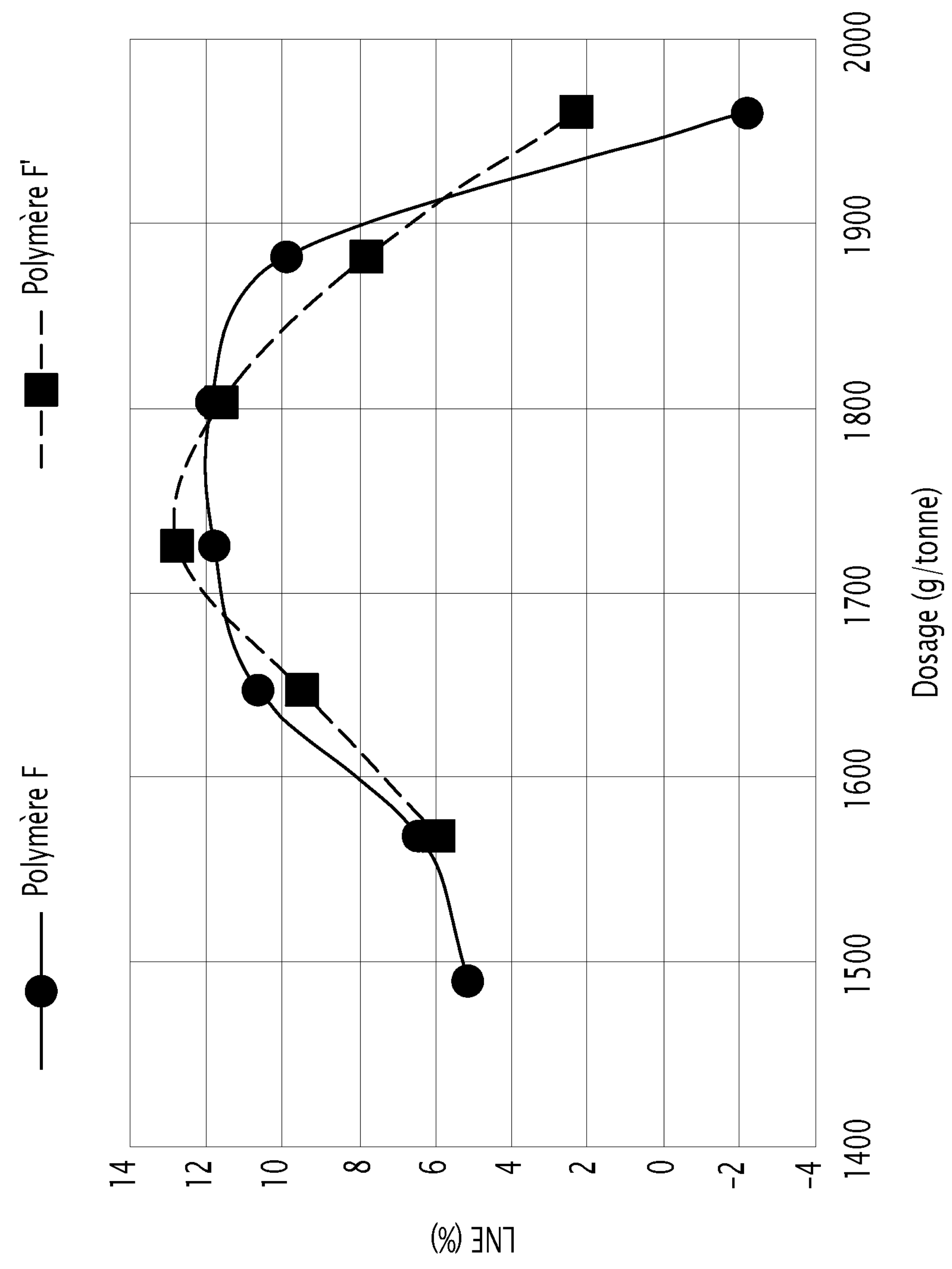
Polymère F
Polymère F'
LNE (%)
14
12
10
8
6
4
2
0
-2
-4
1400
1500
1600
1700
1800
1900
2000
Dosage (g/tonne)

FIG.9

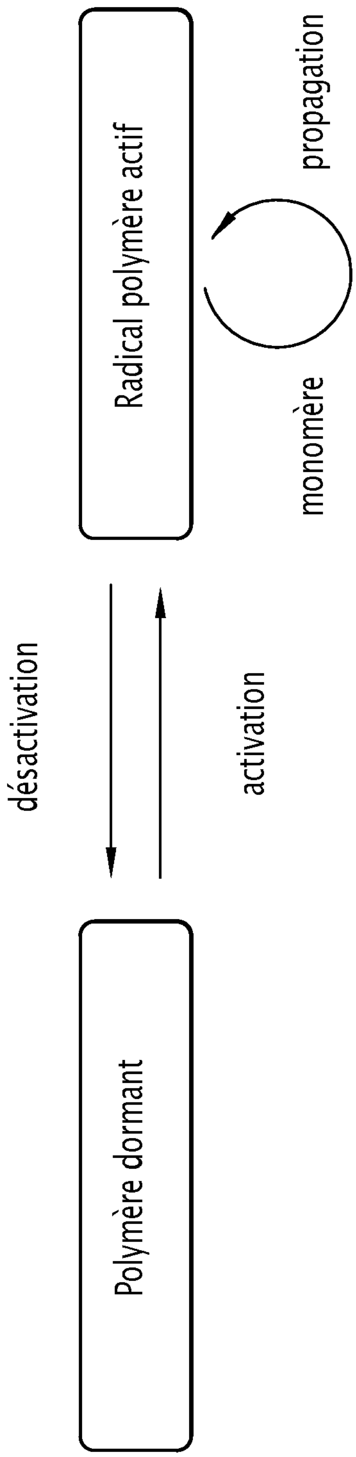
Polymère dormant
désactivation
activation
Radical polymère actif
monomère
propagation

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015180900 A1
- JP 2015057275 A
- CN 102229690 A